# EUROPEAN PATENT SPECIFICATION

(11) **EP 3 521 741 B1**
(45) Date of publication and mention of the grant of the patent: **26.05.2021**
(21) Application number: 17855523.1
(22) Date of filing: 28.08.2017
(51) Int. Cl.: F28D 7/02, F28F 9/26

(54) **HEAT EXCHANGER, AND REFRIGERATION CYCLE DEVICE WITH SAME**
WÄRMETAUSCHER UND DAMIT AUSGESTATTETE KÄLTEKREISLAUFVORRICHTUNG
ÉCHANGEUR DE CHALEUR, ET DISPOSITIF À CYCLE DE RÉFRIGÉRATION DOTÉ DE CE DERNIER

(30) Priority: 27.09.2016 JP 2016187645
(43) Date of publication of application: 07.08.2019
(73) Proprietor: Panasonic Intellectual Property Management Co., Ltd., Osaka-shi, Osaka 540-6207 (JP)
(72) Inventor: KOISHIHARA Kazuki, Osaka-shi Osaka 540-6207 (JP); MACHIDA Kazuhiko, Osaka-shi Osaka 540-6207 (JP); YAMAOKA Yuuki, Osaka-shi Osaka 540-6207 (JP); NAKATANI Kazuhito, Osaka-shi Osaka 540-6207 (JP)
(74) Representative: Eisenführ Speiser
(86) International application number: PCT/JP2017/030645
(87) International publication number: WO 2018/061565

(56) References cited:
- DE-U1- 29 500 063
- JP-A- 2003 028 583
- JP-A- 2003 097 898
- JP-A- 2008 190 777
- JP-A- 2008 292 107
- JP-A- 2010 091 128
- JP-A- 2010 127 610
- JP-A- 2010 127 610
- JP-A- 2015 034 664
- JP-A- 2016 102 643
- JP-U- S5 254 959
- NL-A- 7 802 258
- US-A- 2 471 317

## Description

### TECHNICAL FIELD

The present invention relates to a heat exchanger that performs heat exchange between fluids The invention relates more specifically to heat exchangers as defined in the preamble of claim 1 and as disclosed in NL 7 802 258.

### BACKGROUND ART

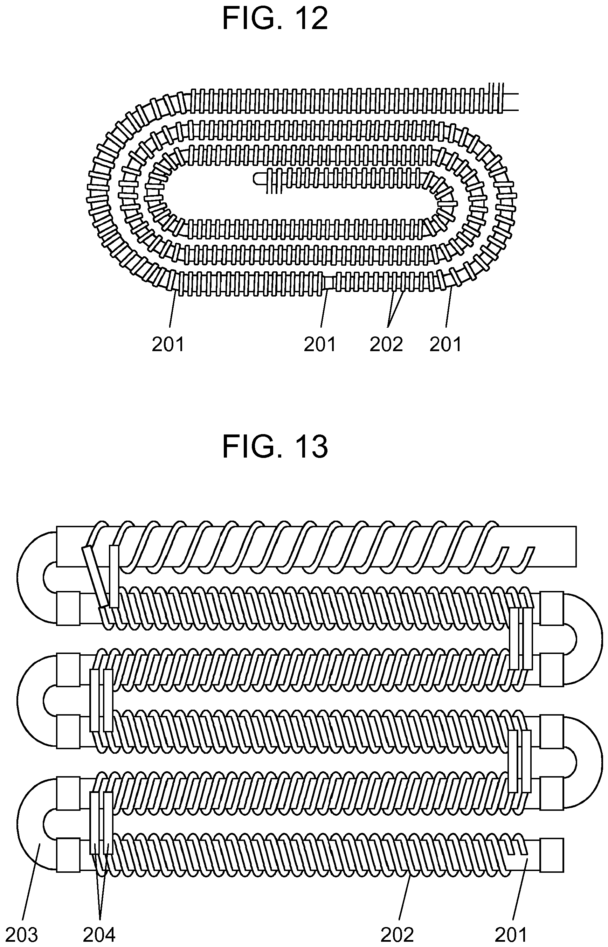

Conventionally, as such a type of heat exchanger, as illustrated in FIG. 12, a heat exchanger has been proposed that includes inner pipe 201 formed into a spiral shape to form a water flow channel, and outer pipe 202 wound around an outer periphery of inner pipe 201 in a helical manner to form a refrigerant flow channel, and that is configured to make water flowing in the water flow channel be heated by refrigerant flowing in the refrigerant flow channel (e.g., see PTL 1).

Furthermore, as illustrated in FIG. 13, a heat exchanger has been proposed that includes a plurality of inner pipes 201 aligned in parallel and outer pipes 202 wound around respective outer periphery of inner pipes 201 in a helical manner (e.g., see PTL 1). In such a conventional heat exchanger, inner pipes 201 are connected via a manifold 203 to form a water flow channel having a serpentine shape. Then, water flowing in the water flow channel having a serpentine shape is configured to be heated by refrigerant flowing in a refrigerant flow channel.

However, in the above-mentioned conventional configurations, since the heat exchanger is formed in a spiral manner, or a serpentine manner, there is a problem in that the heat exchanger is upsized when heat exchange capability is made large.

NL 7 802 258 A discloses a heat exchanger with spiral countercurrent flow, wherein the heat exchanger comprises three or more concentric tubes forming two annular flow passages, each equipped with an inlet and an outlet for a medium flowing through therein. A spiral strip is fixed in each annular passage, spirals in adjacent annular passages being wound in the opposite sense. The heat exchanger is built up of a number of the above basic elements, each terminating in an end piece with feed and discharge passages, wherein the bundle is linked by an end manifold. End pieces are preferably attached by means of a screwed connection on one of the concentric tubes. By selecting the pitch of the spiral wound elements, a wide range of medium throughputs can be obtained by using standard tubes and fittings without changing the Reynolds number or the heat transfer per length by the media.

### Citation List

### Patent Literature

PTL 1: Unexamined Japanese Patent Publication No. 2003-97898

### SUMMARY OF THE INVENTION

The present invention solves the above-mentioned conventional problem, and an object thereof is to provide a heat exchanger highly convenient that can change heat-transfer area depending on heat exchange capability.

In order to solve the above-mentioned conventional problem, a heat exchanger of the present invention includes a plurality of heat exchange units each including an inner pipe in which a first fluid flows, an insertion body inserted in the inner pipe, and at least one or more outer pipes in which a second fluid flows, the one or more outer pipes being provided on an outer periphery of the inner pipe, and a joint unit installed on the inner pipe, ends of the plurality of heat exchange units being connected by the joint unit. The insertion body includes a shaft and a helical protrusion placed on an outer surface of the shaft. The first fluid flows in a helical flow channel including an inner surface of the inner pipe, the shaft, and the helical protrusion. At least two or more heat exchange units among the plurality of heat exchange units are communicated by the joint unit. The first fluid is branched by the joint unit and flows in the inner pipe in the same direction in at least two or more heat exchange units. Each of the plurality of heat exchange units includes a drain port that drains water inside each of the plurality of heat exchange units. The joint unit includes a plurality of joints and a communication passage that makes the plurality of joints be communicated. The drain port is placed on any of the plurality of joints or the communication passage.

This makes the helical flow channels in which the first fluid flows are communicated by the joint unit in the plurality of heat exchange units placed in parallel (including substantially parallel) in vertical direction or horizontal direction. Accordingly, heat-transfer area (the number of heat exchange units) can be changed depending on a predetermined heat exchange capability, making it possible to provide a heat exchanger highly convenient that can change heat-transfer area depending on heat exchange capability.

According to the present invention, a heat exchanger highly convenient can be provided that can change heat-transfer area depending on heat exchange capability.

### BRIEF DESCRIPTION OF DRAWINGS

FIG. 1 is a perspective view of a heat exchanger according to a first exemplary embodiment of the present invention.
FIG. 2 is a perspective view of the heat exchanger in which some of its components are detached therefrom according to the first exemplary embodiment of the present invention.
FIG. 3 is a schematic view on a lower stage side of the heat exchanger in FIG. 1.
FIG. 4 is a schematic view on an upper stage side of the heat exchanger in FIG. 1.
FIG. 5 is a cross-sectional view taken along line A-A of the heat exchanger in FIG. 3 and FIG. 4.
FIG. 6A is a perspective view illustrating the flow of refrigerant of an outer pipe of a heat exchange unit according to the first exemplary embodiment of the present invention.
FIG. 6B is a perspective view illustrating the flow of water of an inner pipe of the heat exchange unit.
FIG. 7 is an enlarged view of portion B in FIG. 5.
FIG. 8A is a cross-sectional view of the heat exchange unit according to the first exemplary embodiment of the present invention (view in a case where a shape of a helical protrusion of an insertion body is rectangular).
FIG. 8B is a cross-sectional view of another heat exchange unit according to the first exemplary embodiment of the present invention (view in a case where a shape of a helical protrusion of an insertion body is trapezoid).
FIG. 9 is an enlarged view of portion C in FIG. 5 (cross-sectional view illustrating a positional relation between the heat exchange unit and a drain mechanism.
FIG. 10 is an enlarged view of portion C in FIG. 5 (cross-sectional view illustrating a positional relation between the heat exchange unit and an air vent mechanism.
FIG. 11 is a schematic configuration diagram of a refrigeration cycle device according to a second exemplary embodiment of the present invention.
FIG. 12 is a schematic view of a conventional heat exchanger.
FIG. 13 is schematic view of another conventional heat exchanger.

### DESCRIPTION OF EMBODIMENTS

A first invention includes a plurality of heat exchange units each including an inner pipe in which a first fluid flows, an insertion body inserted in the inner pipe, and at least one or more outer pipes in which a second fluid flows, the one or more outer pipes being provided on an outer periphery of the inner pipe, and a joint unit installed on the inner pipe, ends of the plurality of heat exchange units being connected by the joint unit. The insertion body includes a shaft and a helical protrusion placed on an outer surface of the shaft. The first fluid flows in a helical flow channel including an inner surface of the inner pipe, the shaft, and the helical protrusion. At least two or more heat exchange units among the plurality of heat exchange units are communicated by the joint unit. The first fluid is branched by the joint unit and flows in the inner pipe in the same direction in at least two or more heat exchange units. Each of the plurality of heat exchange units includes a drain port that drains water inside each of the plurality of heat exchange units. The joint unit includes a plurality of joints and a communication passage that makes the plurality of joints be communicated. The drain port is placed on any of the plurality of joints or the communication passage.

This makes the helical flow channels in which the first fluid flows are communicated by the joint unit in the plurality of heat exchange units placed in parallel (including substantially parallel) in vertical direction or horizontal direction. Accordingly, heat-transfer area (the number of heat exchange units) can be changed depending on a predetermined heat exchange capability, making it possible to provide a heat exchanger highly convenient that can change heat-transfer area depending on heat exchange capability.

In a second invention, a flow direction of the first fluid in one of the plurality of heat exchanger units located on a most upstream side and a flow direction of the first fluid in another one of the plurality of heat exchanger units located on a most downstream side are invers directions specifically in the first invention.

This makes the first fluid flow in the heat exchange units in a serpentine manner (including substantially serpentine manner), making it possible to provide the heat exchanger that can ensure heat-transfer area of the heat exchange unit depending on a predetermined heat exchange capability in a limited installation area.

In a third invention, a flow of the first fluid is counter to a flow of the second fluid specifically in the first or the second invention.

This enables the first fluid and the second fluid to exchange heat by counter flow in an entire region (including substantially entire region) of the heat exchanger, making it possible to provide a heat exchanger having high heat-transfer properties.

Each of the plurality of heat exchange units includes a drain port that drains water inside each of the plurality of heat exchange units, and the joint unit includes a plurality of joints and a communication passage that makes the plurality of joints be communicated specifically in the third invention. The drain port is placed on any of the plurality of joints or the communication passage.

This makes it possible to completely drain water inside the heat exchange unit via the drain port depending on positional energy during water draining operation. This makes it possible to provide a heat exchanger having high reliability with respect to frozen destruction.

In a fourth invention, each of the plurality of heat exchange units includes an exhaust port that exhausts air inside each of the plurality of heat exchange units specifically in the first invention. The exhaust port is located on an upper side than the drain port in vertical direction.

This makes air inside the heat exchange unit move upward in vertical direction due to density difference between water and air during air vent operation. This makes it possible to promptly exhaust air inside the heat exchange unit via the exhaust port, making it possible to shorten working hour during test operation of equipment mounting thereon the heat exchanger. In addition, air inside the heat exchange unit can be completely exhausted outside, making it possible to prevent air biting of a transfer device of the first fluid. This makes it possible to improve reliability of equipment mounting thereon the heat exchanger.

A refrigeration cycle device according to a fifth invention includes a refrigerant circuit that connects a compressor, the heat exchanger according to any of the above-mentioned inventions 1 to 4, a decompressor, and an evaporator in an annular manner, and a control device that performs a defrosting operation mode for defrosting frost on the evaporator. The insertion body is made of a resin. By forming a part of the flow channel of the first fluid (insertion body) by a resin having a specific heat larger than that of metal (e.g., copper: 385 J/(kg·K), Poly Phenylene Sulfide (PPS): 800∼1000 J/(kg·K)), heat storage amount of the heat exchanger is increased, enabling to use more heat amount from the heat exchanger during defrosting.

This makes it possible to finish defrosting operation with a short period, leading to improve defrosting capability of equipment.

Hereinafter, exemplary embodiments of the present invention will be described with reference to the accompanying drawings. Note that the present invention is not limited by the exemplary embodiment.

### (First exemplary embodiment)

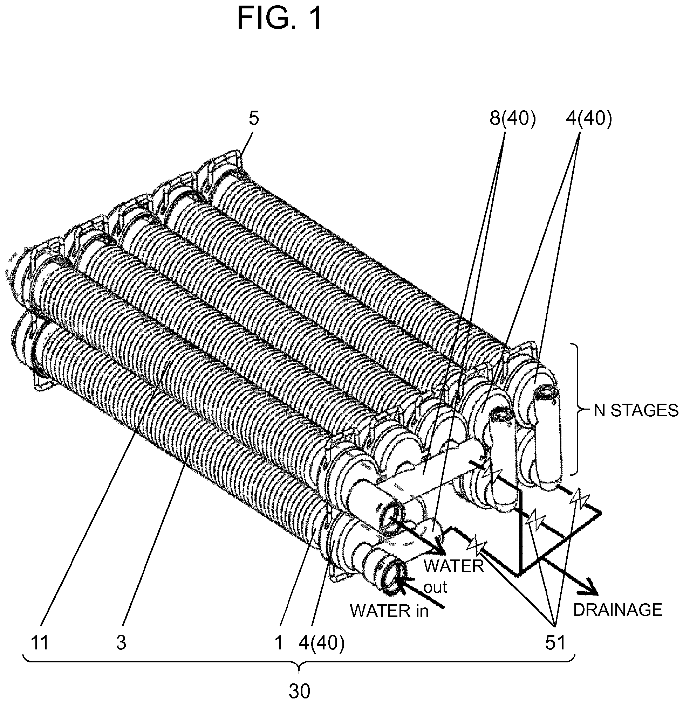

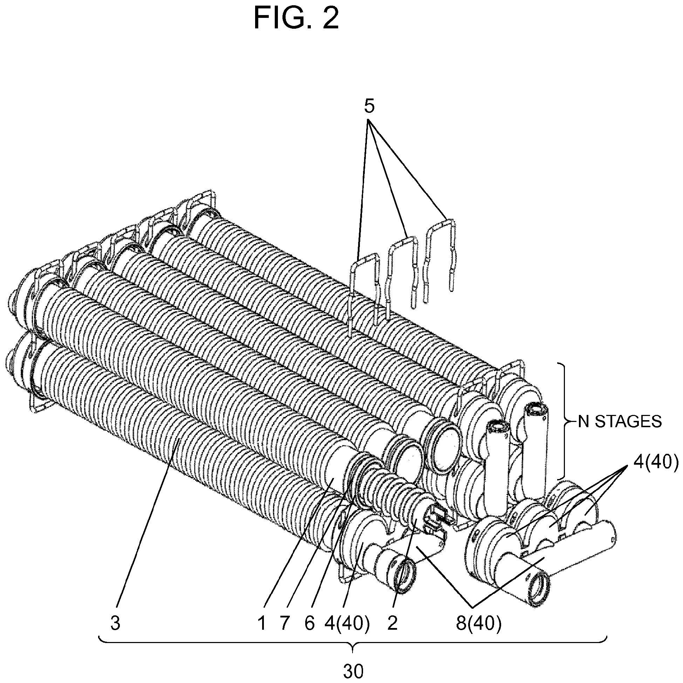

FIG. 1 is a perspective view of a heat exchanger according to a first exemplary embodiment of the present invention. FIG. 2 is a perspective view of the heat exchanger in which some of its components are detached therefrom according to the first exemplary embodiment of the present invention.

In Fig. 1, heat exchanger 30 according to the first exemplary embodiment of the present invention includes a plurality of heat exchange units 11 aligned in parallel (including substantially parallel) in vertical direction and horizontal direction. Then, ends of at least two or more heat exchange units 11 are connected by joint unit 40. Note that, in the present exemplary embodiment, joint unit 40 includes a plurality of joints 4 and communication passage 8 for making the plurality of joints 4 be communicated, but is not limited to this configuration. Joint 4 may be one. Joints 4 and communication passage 8 may be integrally formed. A configuration may be employed in which no communication passage 8 is provided by making joints 4 have a function of communication passage 8. Alternatively, communication passage 8 may be provided inside joints 4. Furthermore, it is preferable that the plurality of joints 4 have the same shape with each other.

The heat exchange unit 11 includes inner pipe 1 having a straight pipe shape in which water that is a first fluid flows, and at least one or more outer pipes 3 in which refrigerant that is a second fluid flows. Note that outer pipe 3 is connected by brazing so that refrigerant sequentially flows in one flow channel.

Furthermore, in FIG. 2, at an end of inner pipe 1, sealing part 6 is fixed or subjected to flanging to form a sealing component groove. Sealing component 7 is set to the sealing component groove at the end of inner pipe 1 during assembling, and insertion body 2 and joint 4 are made to be fitted to ensure water-tightness. Joint 4 covers inner pipe 1 from outside and installed and fixed by fastening member 5. This prevents joint 4 from being escaped from inner pipe 1. Note that a position between insertion body 2 and inner pipe 1 may be fixed by making joint 4 be fitted with insertion body 2.

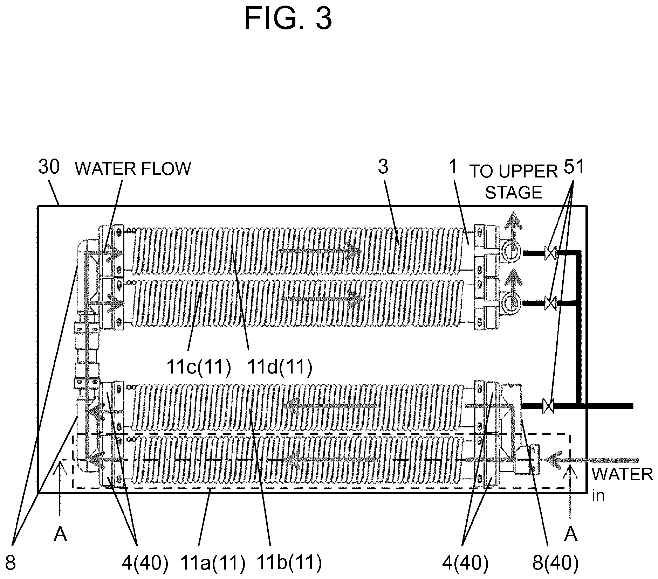

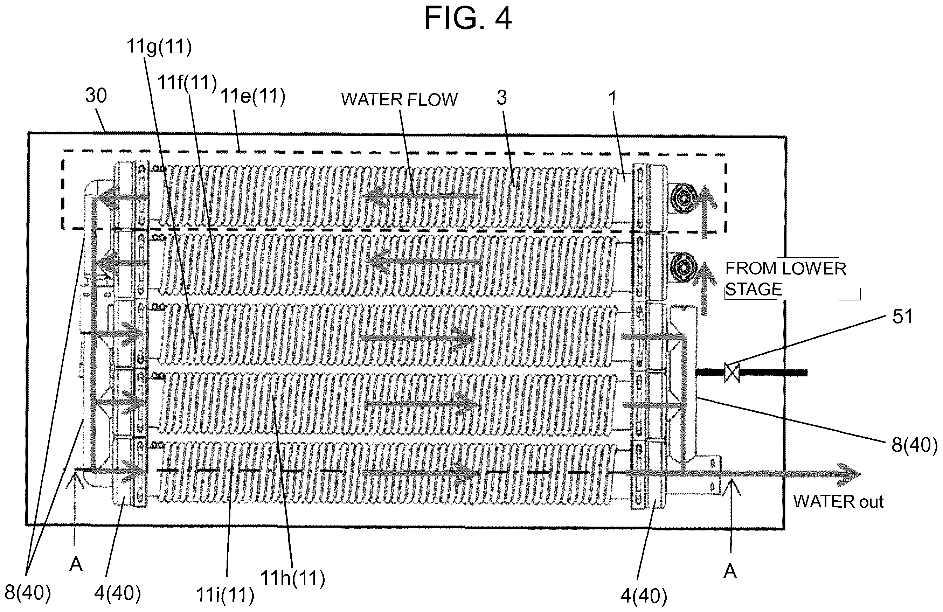

FIG. 3 is a schematic diagram on a lower stage side of the heat exchanger in FIG. 1, and FIG. 4 is a schematic diagram on an upper stage side of the heat exchanger in FIG. 1.

As illustrated in FIG. 3 and FIG. 4, in heat exchanger 30 according to the first exemplary embodiment of the present invention, four heat exchange units 11 (11a to 11d) aligned in parallel (including substantially parallel) in horizontal direction are placed on the lower stage side, and five heat exchange units 11 (11e to 11i) aligned in parallel (including substantially parallel) in horizontal direction are placed on the upper stage side.

Then, in heat exchange units (11a to 11d) on the lower stage side, two heat exchange units 11 (11a and 11b, and 11c and 11d) are connected by joint unit 40. Also, in heat exchange units (11e to 11i) on the upper stage side, three heat exchange units 11 (11g to 11i), and two heat exchange units 11 (11e and 11f) are connected by joint unit 40.

Furthermore, heat exchange unit 11 connected at joint unit 40 via communication passage 8 provided to joint 4 is configured to make water flow in inner pipe 1 in the same direction.

That is, as illustrated in FIG. 3, water flows in from one heat exchange unit 11a located on the lower stage side, and water is branched in two directions by communication passage 8 provided to joints 4. In two heat exchange units 11a, 11b, water flows in inner pipes 1 in the same direction, and the water flows into the other two heat exchange units 11c, 11d via communication passage 8 provided to joints 4. In two heat exchange units 11c, 11d, water flows in inner pipes 1 in the same direction.

Furthermore, as illustrated in FIG. 4, water flowed out from heat exchange units 11c, 11d located on the lower stage side flows in two heat exchange units 11e, 11f located on the upper stage side. Then, in two heat exchange units 11e, 11f, water flows in inner pipes 1 in the same direction, and water flows into three heat exchange units 11g, 11h, 11i via communication passage 8 provided to joints 4. In three heat exchange units 11g, 11h, 11i, water flows in inner pipes 1 in the same direction, and the water is collected by communication passage 8 provided to joints 4. Then, water flows out from heat exchanger 30.

That is, as illustrated in FIG. 3 and FIG. 4, heat exchanger 30 according to the first exemplary embodiment of the present invention is configured such that, in flow direction of water that is the first fluid, a flow direction of water in inner pipe 1 in heat exchange unit 11 in which water flows on the lower stage side located on the most upstream side and a flow direction of water in inner pipe 1 in heat exchange unit 11 in which water flows on the upper stage side located on the most downstream side are inverse directions.

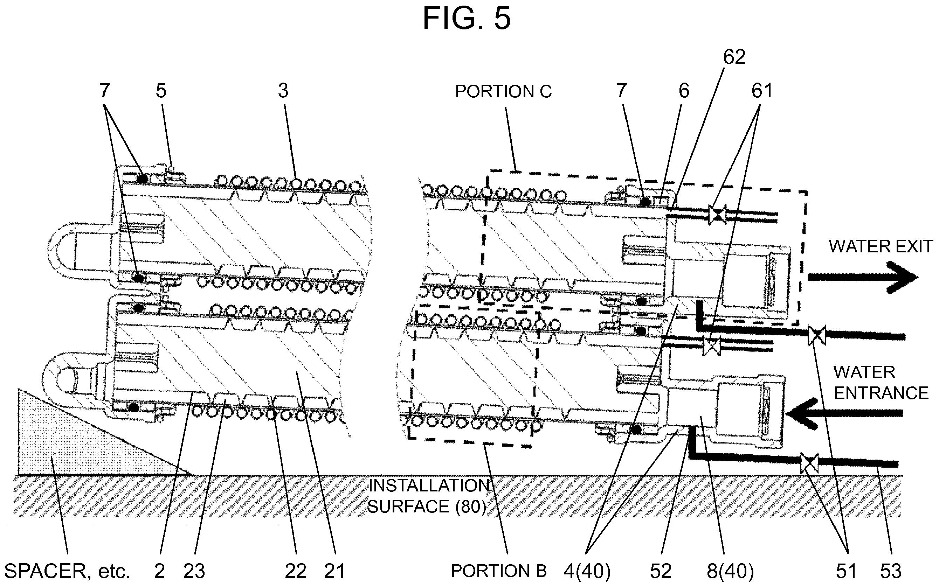

FIG. 5 is a cross-sectional view taken along line A-A of heat exchanger 30 according to FIG. 3 and FIG. 4. As illustrated in FIG. 5, heat exchange unit 11 includes drain port 52 for draining water inside heat exchange unit 11. Specifically, as illustrated in FIG, 5, drain port 52 is provided on joint 4 installed on each heat exchange unit 11 or communication passage 8 communicated with joints 4.

Also, as illustrated in FIG. 5, heat exchange unit 11 includes an exhaust port 62 for exhausting air inside heat exchange unit 11. Exhaust port 62 is provided on the upper side of joint 4 than drain port 52. Note that, as illustrated in FIG. 5, when heat exchanger 30 is installed on equipment such that drain port 52 is located on a lower side of joint 4 held to each heat exchange unit 11, draining properties improve.

That is, heat exchange unit 11 is provided so as to be preliminarily inclined with respect to installation surface 80. Then, drain port 52 is provided to only joint 4 installed on inner pipe 1 on a lower side of heat exchange unit 11 with respect to installation surface 80. This enables water inside heat exchanger 30 be promptly discharged outside, resulting in shortage of time of drainage work. This makes it possible to provide heat exchanger 30 improved in its maintenance property.

Furthermore, inner water can be discharged from only on the lower side of inner pipe 1 of heat exchange unit 11 with respect to installation surface 80, making it possible to simplify maneuverability of a water vent pipe or the like. This makes it possible to downsize heat exchanger 30 formed by heat exchange units 11.

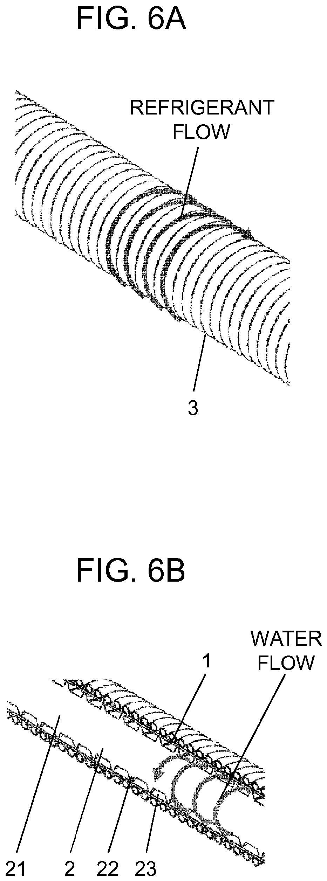

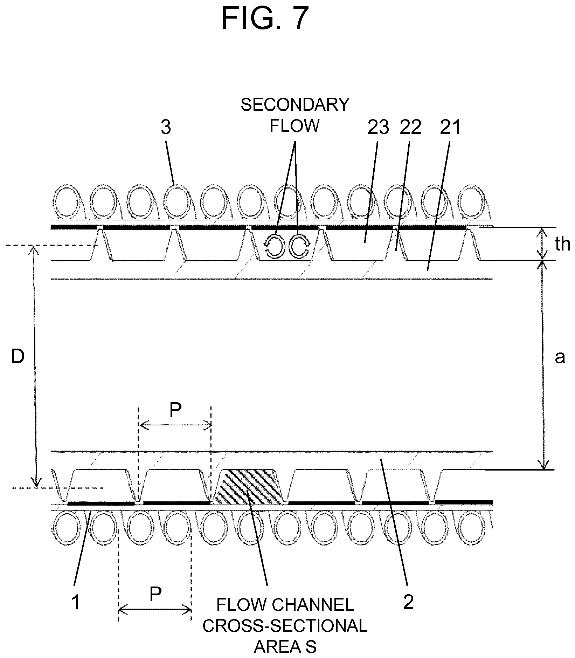

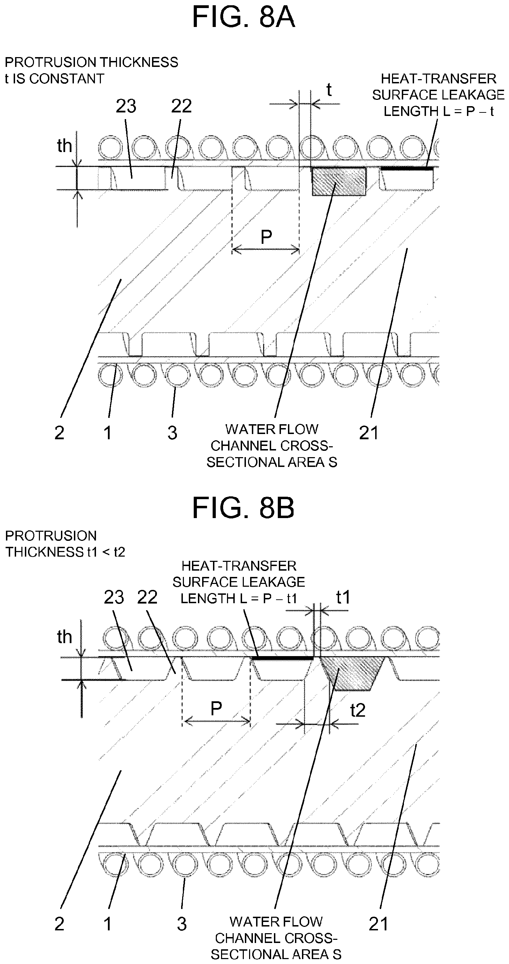

FIG. 6A and FIG. 6B each are a perspective view illustrating flow of fluid flowing in heat exchange unit 11 according to the first exemplary embodiment of the present invention. Also, FIG. 7 is an enlarged view of portion B in FIG. 5. FIGS. 8A and 8B are cross-sectional views of heat exchange unit 11 according to the first exemplary embodiment of the present invention.

In FIG. 6A, FIG. 6B, and FIG. 7, in heat exchange unit 11, water that is the first fluid flows in helical flow channel 23 including an inner surface of inner pipe 1, an outer surface of insertion body shaft 21, and adjacent helical protrusions 22. A helical direction of helical protrusion 22 and a helical wound direction of outer pipe 3 are same directions, and wound pitches are also same. Carbon dioxide that is the second fluid flowing inside outer pipe 3 wound around a portion opposed to helical flow channel 23 and water that is the first fluid exchange heat.

Herein, water flowing in helical flow channel 23 between inner pipe 1 and insertion body 2 and carbon dioxide flowing inside outer pipe 3 are inverse in their flowing directions, making it possible to exchange heat by counter flow across the entire region (including substantially entire region) of heat exchanger 30. This provides heat exchanger 30 having a high efficiency.

As described above, joint unit 40 makes the plurality of heat exchange units 11 be connected as well as makes helical flow channels 23 of at least two or more other heat exchange units 11 be communicated. Furthermore, joint unit 40 plays a role of branching or joining flow of water.

Note that, it is sufficient that outer pipe 3 is wound within a range that can provide heat exchange efficiency required by equipment mounting thereon heat exchanger 30 even when all of sites of outer pipe 3 to be wound are not wound around the portion opposed to helical flow channel 23. Furthermore, a plurality of outer pipes 3 in which the second fluid flows may be equipped, and they may be wound around the portion opposed to helical flow channel 23 alternately.

Note that, as illustrated in FIG. 7, making insertion body 2 be hollow provides weight saving. Furthermore, as illustrated in FIG. 7, composing helical flow channel 23 that is a water channel of heat exchange unit 11 by two components that are inner pipe 1 and insertion body 2 makes it possible to design longest distance (a + 2th) of heat exchange unit 11 from a water side heat-transfer surface by diameter "a" of insertion body shaft 21 and protrusion height "th" of helical protrusion 22.

As illustrated in FIG. 8A, leakage length L of the water side heat-transfer surface of heat exchange unit 11 is determined by P - t (or P - t1) obtained by subtracting helical rib distal width t (or t1) from helical pitch P.

As illustrated in FIG. 8B, by making the shape of the helical protrusion of insertion body 2 satisfy t1 < t2, leakage length L of water side heat-transfer surface can be increased by t - t1 than a case where thickness t of the helical protrusion is constant while keeping water side flow channel cross-sectional area S same like a case where thickness t of the helical protrusion is constant in FIG. 8A. This increases the heat-transfer area on the water side, making it possible to provide heat exchange unit 11 high in heat-transfer properties.

Furthermore, water flow channel cross-sectional area S can be designed by changing winding pitch P of helical protrusion 22 of insertion body 2 so as to be water pressure loss that can be tolerated by a water transfer pump for transferring water. Accordingly, dead water region can be substantially reduced within a range of water pressure loss limitation.

Furthermore, the flow channel cross section of helical flow channel 23 that is water flow channel is formed to be a rectangular shape by the inner surface of inner pipe 1, insertion body shaft 21, and helical protrusion 22. This makes eddy be readily generated to increase effect of secondary flow as compared with a case where the cross section has a circular shape.

As illustrated in FIG. 7, composing helical flow channel 23 that is water flow channel by two components that are inner pipe 1 and insertion body 2 having helical protrusion 22 makes it possible to form helical flow channel 23 without winding inner pipe 1. This makes it possible to provide heat exchange unit 11 lightweight and superior in economics in which a wall thickness of inner pipe 1 is made minimum.

Furthermore, longest distance (a + 2th) from the heat-transfer surface of the water side flow channel can be designed by diameter "a" of insertion body shaft 21 and height "th" of the protrusion of helical protrusion 22. Furthermore, flow channel cross-sectional area S can be designed by changing winding pitch P of helical protrusion 22 so that water pressure loss becomes within a limitation. This makes it possible to provide heat exchange unit 11 high in heat-transfer properties in which dead water region is substantially reduced within a limitation range of water pressure loss.

Next, water drainage treatment for draining water inside heat exchange unit 11, and air vent treatment for venting air inside heat exchange unit 11 will be described.

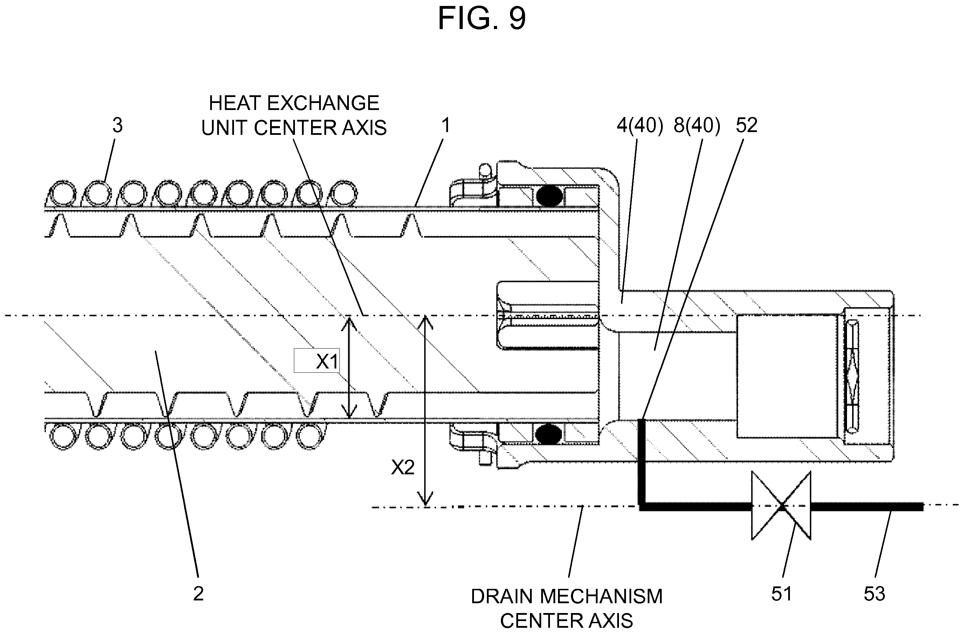

FIG. 9 is a schematic cross-sectional view illustrating a positional relation between a center axis in horizontal direction with respect to the installation surface of heat exchange unit 11, and a center axis of drain mechanism 51 including drain port 52 and opening and closing mechanism provided on a downstream side in flow of drain port 52.

Note that drain mechanism 51 completely drains water inside heat exchanger 30 outside by opening the drain mechanism 51 connected to joint 4 in the case where, for example, equipment (hot water dispenser or the like) mounting thereon heat exchanger 30 is not used for a long period while external air is low temperature.

As illustrated in FIG. 9, drain port 52 and drain mechanism 51 are connected to joint 4 or communication passage 8 such that drain port 52 and the center axes of drain mechanism 51 are located on a lower side than the center axis of heat exchange unit 11 in vertical direction.

Specifically, drain port 52 is provided at a position having the same height as an inner lower surface of inner pipe 1 in height direction. That is, drain port 52 is provided to joint 4 or communication passage 8 to make water be drained on the lower side of helical flow channel 23 of heat exchange unit 11.

Furthermore, heat exchanger 30 is configured such that a relation between distance X1 from the center axis of heat exchange unit 11 to the inner lower surface of inner pipe 1, and distance X2 from the center axis of heat exchange unit 11 to a bottom surface of water vent pipe 53 provided with drain mechanism 51 in vertical direction satisfies X1 ≤ X2. Note that, as illustrated in FIG. 5, when heat exchanger 30 is installed on equipment such that drain port 52 is located on the lower side, water inside heat exchange unit 11 is completely flown out outside depending on positional energy during water draining operation. This makes it possible to provide heat exchanger 30 prevented from frozen destruction to have high reliability.

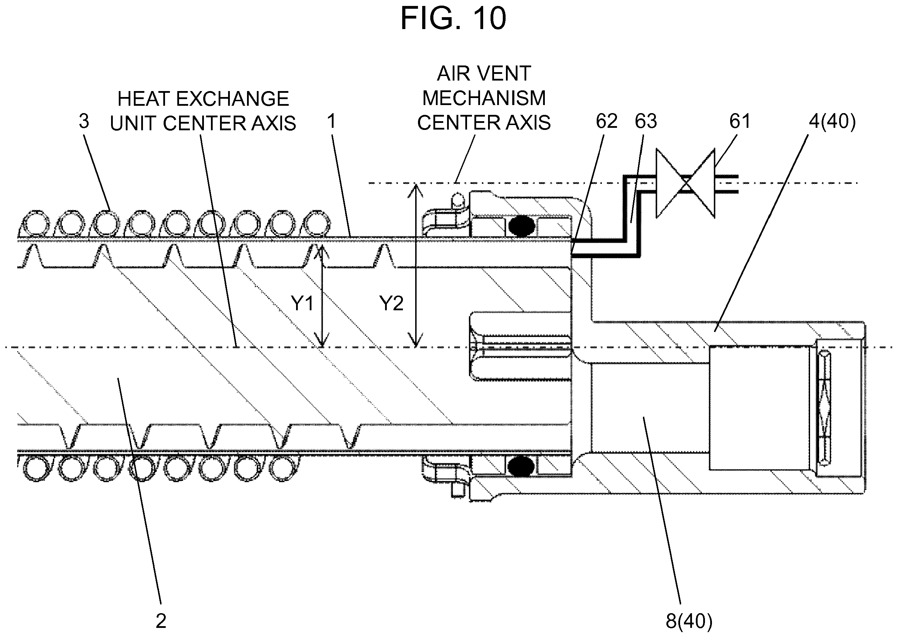

FIG. 10 is a schematic cross-sectional view illustrating a positional relation between the center axis in the horizontal direction with respect to the installation surface of heat exchange unit 11, and a center axis of air vent mechanism 61 including exhaust port 62 and an opening and closing mechanism provided on the downstream side in flow of exhaust port 62.

Note that, air vent mechanism 61 completely vents air inside heat exchanger 30 by opening the air vent mechanism 61 connected to joint 4 when air vent operation for exhausting air existing in heat exchanger 30 outside is performed when initial test operation is performed from when equipment mounting thereon heat exchanger 30 is installed or at the time of recovery from long term non-operation.

As illustrated in FIG. 10, exhaust port 62 and air vent mechanism 61 are connected to joint 4 such that exhaust port 62 and the center axes of air vent mechanism 61 are located on an upper side than the center axis of heat exchange unit 11 in vertical direction.

Specifically, exhaust port 62 is provided at a position having the same height as an inner upper surface of inner pipe 1 in height direction. That is, exhaust port 62 is provided to joint 4 so as to exhaust air from an upper side of helical flow channel 23 of heat exchange unit 11.

Furthermore, heat exchanger 30 is configured such that a relation between distance Y1 from the center axis of heat exchange unit 11 to the inner upper surface of inner pipe 1, and distance Y2 from the center axis of heat exchange unit 11 to an upper surface in vertical upper direction of air vent pipe 63 provided with air vent mechanism 61 satisfies Y1 ≤ Y2. As illustrated in FIG. 5, since exhaust port 62 is provided at an upper position than drain port 52 provided to joint 4 of each heat exchange unit 11, air moves in vertically upper direction due to density difference between water and air during air vent operation. This makes it possible to perfectly vent air in heat exchange unit 11. Accordingly, in equipment, air biting of a water transport pump (not shown) for transporting water can be prevented, making it possible to improve reliability of equipment mounting thereon heat exchanger 30.

As described above, in heat exchanger 30, heat exchange units 11 are aligned to be one stage in parallel or a plurality of stages loaded, and connected by joints 4 to form a flow channel in a serpentine manner. Accordingly, heat exchange units 11 can be disposed without useless space in a limited installation area, making it possible to provide downsized heat exchanger 30.

Furthermore, in the present exemplary embodiment, heat exchange units 11 having a straight pipe shape are connected via joints 4 so that equipment mounting thereon heat exchanger 30 satisfies a predetermined heat exchange capability and storage performance, making it possible to provide downsized heat exchanger 30 that satisfies a predetermined heat exchange capability.

### (Second exemplary embodiment)

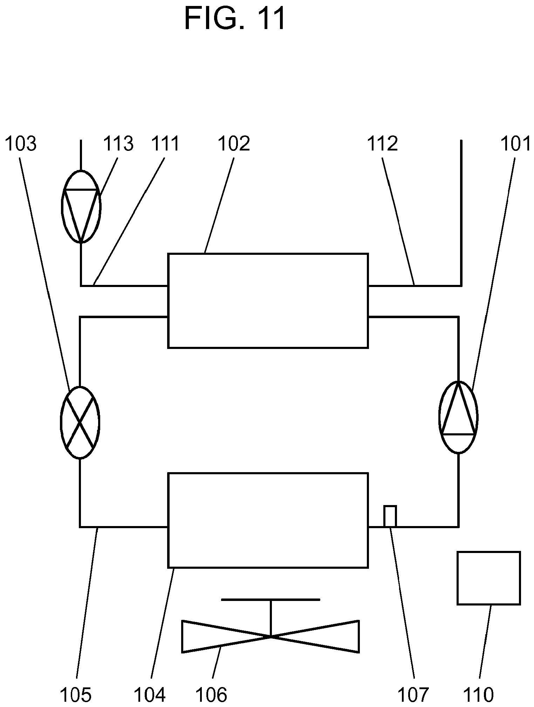

FIG. 11 is a configuration diagram of a refrigeration cycle device according to a second exemplary embodiment of the present invention.

Note that same reference numerals are used to refer to the same components in the first exemplary embodiment of the present invention, and their description will be omitted.

FIG. 11 is a refrigeration cycle device to be mounted on, for example, a heat pump hot water dispenser. The refrigeration cycle device includes compressor 101, radiator 102 that is heat exchanger 30 described in the first exemplary embodiment of the present invention, decompressor 103 that is an electronic expansion valve, evaporator 104, and refrigerant circuit 105 connecting them in an annular manner.

Refrigerant circuit 105 includes evaporator outlet temperature detection means 107 for detecting temperature of refrigerant flown out from evaporator 104, and the refrigeration cycle device includes control device 110 that performs defrosting operation mode.

Carbon dioxide is enclosed as refrigerant in refrigerant circuit 105, and during operating compressor 101, its high-pressure side is operated in a supercritical state.

Furthermore, insertion body 2 having helical protrusion 22 composing radiator 102 (corresponding to heat exchange unit 11 composing heat exchanger 30 described in the first exemplary embodiment of the present invention) is made of a resin (copper: 385 J/(kg·K), PPS: 800∼1000 J/(kg·K)) whose specific heat is larger than that of metal.

Operation and behavior of the refrigeration cycle device configured above will be described below.

When compressor 101 is operated, refrigerant compressed to a high pressure and ejected is transferred to radiator 102, and exchanges heat with low temperature water transferred by water transfer pump 113 via water inlet pipe 111 for radiation. This makes the lower temperature water heated become high temperature water, and the high temperature water is transferred to a hot water storage tank (not shown) via hot water outlet pipe 112 to be stored as high temperature water.

Refrigerant flown out from radiator 102 is supplied to decompressor 103 to be decompressed and expanded. Next, the refrigerant is transferred to evaporator 104, and exchanges heat with air introduced by air blower 106 to be evaporated and gasified. The gasified refrigerant is sucked into compressor 101.

Next, defrosting operation of the heat pump hot water dispenser will be described.

When hot water storage operation is performed in a state where external temperature is low, frost sticks to evaporator 104, so that heat exchange capability of evaporator 104 is drastically lowered.

Therefore, control device 110 performs defrosting operation that defrosts frost adhered to evaporator 104 to recover heat exchange capability of evaporator 104. The defrosting operation is performed when frost is adhered to evaporator 104 and temperature detected by the evaporator outlet temperature detection means 107 becomes lower than a predetermined temperature.

First, water transfer pump 113 for transferring water to radiator 102 and air blower 106 are stopped to reduce flow channel resistance of decompressor 103. The hot refrigerant compressed by compressor 101 passes through radiator 102 and decompressor 103, flows into evaporator 104 to perform defrosting by heat of the refrigerant, and is suctioned into compressor 101.

Then, when temperature detected by evaporator outlet temperature detection means 107 becomes higher than a predetermined temperature, control device 110 finishes the defrosting operation and starts boiling operation.

During the defrosting operation, evaporator 104 is defrosted by also utilizing heat quantity accumulated in radiator 102 in addition to heat quantity of the refrigerant ejected from compressor 101.

By making insertion body 2 that is a part of a flow channel of radiator 102 be made of a resin having a specific heat larger than that of metal (copper:385 J/(kg·K), PPS: 800∼1000 J/(kg·K)), heat storage amount of radiator 102 is increased, enabling to use more heat amount from radiator 102 during defrosting. Accordingly, defrosting operation can be finished with a short time, making it possible to improve defrosting capability of equipment.

Note that, although insertion body 2 having helical protrusion 22 is made of a resin (PPS) in the second exemplary embodiment of the present invention, the similar operation and effect can be expected as long as insertion body 2 is made of a resin other than PPS or a material having a large specific heat.

Note that in the first and second exemplary embodiments of the present invention, the refrigerant that flows in outer pipe 3 shall be carbon dioxide, the similar operation and effect can be expected by using refrigerant of a hydro carbon system or an HFC system (R410A, etc.), or substitute refrigerant thereof.

### INDUSTRIAL APPLICABILITY

As described above, the heat exchanger according to the present invention can provide a heat exchanger having a high usability that can change heat-transfer area depending on heat exchange capability, making it possible to be applied to a refrigeration cycle device mounting thereon the heat exchanger that exchanges heat between fluids.

### REFERENCE MARKS IN THE DRAWINGS

- 1: inner pipe
- 2: insertion body
- 3: outer pipe
- 4: joint
- 5: fastening member (insertion pin)
- 6: sealing part
- 7: sealing component
- 8: communication passage
- 11, 11a, 11b, 11c, 11d, 11e, 11g, 11h, 11i: heat exchange unit
- 21: insertion body shaft
- 22: helical protrusion
- 23: helical flow channel
- 30: heat exchanger
- 40: joint unit
- 51: drain mechanism
- 52: drain port
- 61: air vent mechanism
- 62: exhaust port

## Claims

1. A heat exchanger (30) comprising:
a plurality of heat exchange units (11, 11a, 11b, 11c, 11d, 11e, 11g, 11h, 11i) each including an inner pipe (1) in which a first fluid flows, an insertion body (2) inserted in the inner pipe (1), and at least one or more outer pipes (3) in which a second fluid flows, the one or more outer pipes (3) being provided on an outer periphery of the inner pipe (1); and
a joint unit (40) installed on the inner pipe (1), ends of the plurality of heat exchange units (11, 11a, 11b, 11c, 11d, 11e, 11g, 11h, 11i) being connected by the joint unit (40),
wherein
the insertion body (2) includes a shaft (21) and a helical protrusion (22) placed on an outer surface of the shaft (21),
the first fluid flows in a helical flow channel (23) including an inner surface of the inner pipe (1), the shaft (21), and the helical protrusion (22), and
at least two or more heat exchange units (11, 11a, 11b, 11c, 11d, 11 e, 11g, 11h, 11i) among the plurality of heat exchange units (11, 11a, 11b, 11c, 11d, 11 e, 11g, 11h, 11 i) are communicated by the joint unit (40),
**characterized in that**
the first fluid is branched by the joint unit (40) and flows in the inner pipe (1) in the same direction in at least two or more heat exchange units (11, 11a, 11b, 11c, 11d, 11e, 11g, 11h, 11i),
wherein each of the plurality of heat exchange units (11, 11a, 11b, 11c, 11d, 11e, 11g, 11h, 11 i) includes a drain port (52) that drains water inside each of the plurality of heat exchange units (11, 11a, 11b, 11c, 11d, 11e, 11g, 11h, 11i),
wherein the joint unit (40) includes a plurality of joints (4) and a communication passage (8) that makes the plurality of joints (4) be communicated, and
wherein the drain port (52) is placed on any of the plurality of joints (4) or the communication passage (8).

2. The heat exchanger (30) according to claim 1, wherein a flow direction of the first fluid in one of the plurality of heat exchanger units (11, 11a, 11b, 11c, 11d, 11 e, 11g, 11h, 11i) located on a most upstream side and a flow direction of the first fluid in another one of the plurality of heat exchanger units (11, 11a, 11b, 11c, 11d, 11e, 11g, 11h, 11 i) located on a most downstream side are invers directions.

3. The heat exchanger (30) according to claim 1 or 2, wherein a flow of the first fluid is counter to a flow of the second fluid.

4. The heat exchanger (30) according to claim 1, wherein
each of the plurality of heat exchange units (11, 11a, 11b, 11c, 11d, 11 e, 11g, 11h, 11i) includes an exhaust port (62) that exhausts air inside each of the plurality of heat exchange units (11, 11a, 11b, 11c, 11d, 11e, 11g, 11h, 11i), and
the exhaust port (62) is located on an upper side than the drain port (52) in vertical direction.

5. A refrigeration cycle device comprising:
a refrigerant circuit that connects a compressor, the heat exchanger (30) according to any one of claims 1 to 4, a decompressor, and an evaporator in an annular manner; and
a control device that performs a defrosting operation mode for defrosting frost on the evaporator,
wherein the insertion body (2) is made of a resin.

## Patentansprüche

1. Wärmetauscher (30), umfassend
mehrere Wärmetauschereinheiten (11, 11a, 11b, 11c, 11d, 11e, 11g, 11h, 11i), die jeweils ein inneres Rohr (1), in dem ein erstes Fluid strömt, einen in das innere Rohr (1) eingesetzten Einsatzkörper (2) und mindestens ein oder mehrere äußere Rohre (3), in denen ein zweites Fluid strömt, aufweisen, wobei das eine oder die mehreren äußeren Rohre (3) an einem Außenumfang des inneren Rohrs (1) angeordnet sind; und
eine Verbindungseinheit (40), die an dem inneren Rohr (1) angebracht ist, wobei die Enden der mehreren Wärmetauschereinheiten (11, 11a, 11b, 11c, 11d, 11e, 11g, 11h, 11i) durch die Verbindungseinheit (40) verbunden sind,
wobei
der Einsatzkörper (2) einen Schaft (21) und einen wendelförmigen Vorsprung (22) umfasst, der an einer Außenfläche des Schafts (21) angeordnet ist,
das erste Fluid in einem wendelförmigen Strömungskanal (23) fließt, der eine Innenfläche des inneren Rohrs (1), den Schaft (21) und den wendelförmigen Vorsprung (22) umfasst, und
mindestens zwei oder mehr Wärmetauschereinheiten (11, 11a, 11b, 11c, 11d, 11 e, 11g, 11h, 11i) unter den mehreren Wärmetauschereinheiten (11, 11a, 11b, 11c, 11d, 11 e, 11g, 11h, 11i) durch die Verbindungseinheit (40) verbunden sind,
**dadurch gekennzeichnet, dass**
das erste Fluid durch die Verbindungseinheit (40) abgezweigt wird und im inneren Rohr (1) in mindestens zwei oder mehr Wärmetauschereinheiten (11, 11a, 11b, 11c, 11d, 11 e, 11g, 11h, 11i) in der gleichen Richtung fließt,
wobei jede der mehreren Wärmetauschereinheiten (11, 11a, 11b, 11c, 11d, 11e, 11g, 11h, 11i) eine Ablassöffnung (52) umfasst, die Wasser innerhalb jeder der mehreren Wärmetauschereinheiten (11, 11a, 11b, 11c, 11d, 11e, 11g, 11h, 11i) ablässt,
wobei die Verbindungseinheit (40) mehrere Verbindungen (4) und einen Verbindungsdurchgang (8) umfasst, der die mehreren Verbindungen (4) miteinander in Verbindung bringt, und
wobei die Ablassöffnung (52) an irgendeiner der mehreren Verbindungen (4) oder dem Verbindungsdurchgang (8) angeordnet ist.

2. Wärmetauscher (30) nach Anspruch 1, wobei eine Strömungsrichtung des ersten Fluids in einer der mehreren Wärmetauschereinheiten (11, 11a, 11b, 11c, 11d, 11e, 11g, 11h, 11i), die auf einer am weitesten stromaufwärts befindlichen Seite angeordnet ist, und eine Strömungsrichtung des ersten Fluids in einer anderen der mehreren Wärmetauschereinheiten (11, 11a, 11b, 11c, 11d, 11e, 11g, 11h, 11i), die auf einer am weitesten stromaufwärts befindlichen Seite angeordnet ist, entgegengesetzte Richtungen sind.

3. Wärmetauscher (30) nach Anspruch 1 oder 2, wobei eine Strömung des ersten Fluids entgegengesetzt zu einer Strömung des zweiten Fluids ist.

4. Wärmetauscher (30) nach Anspruch 1, wobei
jede der mehreren Wärmetauschereinheiten (11, 11a, 11b, 11c, 11d, 11e, 11g, 11h, 11i) eine Abluftöffnung (62) umfasst, die Luft aus dem Inneren jeder der mehreren Wärmetauschereinheiten (11, 11a, 11b, 11c, 11d, 11e, 11g, 11h, 11i) abführt, und
die Abluftöffnung (62) in vertikaler Richtung an einer weiter oben liegenden Seite als die Ablassöffnung (52) angeordnet ist.

5. Kühlkreislaufvorrichtung, umfassend:
einen Kältemittelkreislauf, der einen Verdichter, den Wärmetauscher (30) nach einem der Ansprüche 1 bis 4, einen Dekomprimierer und einen Verdampfer ringförmig verbindet; und
eine Steuervorrichtung, die einen Abtaubetriebsmodus zum Abtauen von Reif auf dem Verdampfer durchführt,
wobei der Einsatzkörper (2) aus einem Harz hergestellt ist.

## Revendications

1. Échangeur de chaleur (30) comprenant :
une pluralité d'unités d'échangeur de chaleur (11, 11a, 11b, 11c, 11d, 11e, 11g, 11h, 11i) comprenant chacune un tuyau interne (1) dans lequel un premier fluide s'écoule, un corps d'insertion (2) inséré dans le tuyau interne (1) et au moins un ou plusieurs tuyaux externes (3) dans lesquels un deuxième fluide s'écoule, ledit un ou lesdits plusieurs tuyaux externes (3) étant disposés sur une périphérie externe du tuyau interne (1) ; et
une unité de raccord (40) installée sur le tuyau interne (1), les extrémités de la pluralité d'unités d'échangeur de chaleur (11, 11a, 11b, 11c, 11d, 11e, 11g, 11h, 11i) étant reliées par l'unité de raccord (40),
le corps d'insertion (2) comprenant un arbre (21) et une saillie hélicoïdale (22) placée sur une surface externe de l'arbre (21),
le premier fluide s'écoulant dans un canal d'écoulement hélicoïdal (23) comprenant une surface interne du tuyau interne (1), l'arbre (21) et la saillie hélicoïdale (22) et
au moins deux unités d'échangeur de chaleur ou plus (11, 11a, 11b, 11c, 11d, 11e, 11g, 11h, 11i) parmi la pluralité d'unités d'échangeur de chaleur (11, 11a, 11b, 11c, 11d, 11e, 11g, 11h, 11i) étant en communication par l'unité de raccord (40),
**caractérisé en ce que**
le premier fluide est divisé par l'unité de raccord (40) et s'écoule dans le tuyau interne (1) dans le même sens dans au moins deux unités d'échangeur de chaleur ou plus (11, 11a, 11b, 11c, 11d, 11e, 11g, 11h, 11i),
chaque unité parmi la pluralité d'unités d'échangeur de chaleur (11, 11a, 11b, 11c, 11d, 11e, 11g, 11h, 11i) comprenant un orifice de drainage (52) qui évacue l'eau à l'intérieur de chaque unité parmi la pluralité d'unités d'échangeur de chaleur (11, 11a, 11b, 11c, 11d, 11e, 11g, 11h, 11i),
l'unité de raccord (40) comprenant une pluralité de raccords (4) et un passage de communication (8) qui fait communiquer la pluralité de raccords (4) et
l'orifice de drainage (52) étant placé sur un quelconque raccord parmi la pluralité de raccords (4) ou sur le passage de communication (8).

2. Échangeur de chaleur (30) selon la revendication 1, un sens d'écoulement du premier fluide dans une unité parmi la pluralité d'unités d'échangeur de chaleur (11, 11a, 11b, 11c, 11d, 11e, 11g, 11h, 11i) située sur un côté le plus en amont et un sens d'écoulement du premier fluide dans une autre unité parmi la pluralité d'unités d'échangeur de chaleur (11, 11a, 11b, 11c, 11d, 11e, 11g, 11h, 11i) situées sur un côté le plus en aval étant des sens inverses.

3. Échangeur de chaleur (30) selon la revendication 1 ou 2, un écoulement du premier fluide allant à l'opposé d'un écoulement du deuxième fluide.

4. Échangeur de chaleur (30) selon la revendication 1,
chaque unité parmi la pluralité d'unités d'échangeur de chaleur (11, 11a, 11b, 11c, 11 d, 11e, 11g, 11h, 11i) comprenant un orifice d'évacuation (62) qui évacue l'air à l'intérieur de chaque unité parmi la pluralité d'unités d'échangeur de chaleur (11, 11a, 11b, 11c, 11d, 11e, 11g, 11h, 11i) et
l'orifice d'évacuation (62) étant situé sur un côté plus élevé que celui de l'orifice de drainage (52) dans la direction verticale.

5. Dispositif à cycle de réfrigération comprenant :
un circuit de fluide frigorigène qui relie un compresseur, l'échangeur de chaleur (30) selon l'une quelconque des revendications 1 à 4, un décompresseur et un évaporateur d'une manière annulaire ; et
un dispositif de commande qui effectue un mode de fonctionnement de dégivrage pour dégivrer le givre sur l'évaporateur,
le corps d'insertion (2) étant constitué d'une résine.
